(19) **Europäisches Patentamt European Patent Office Office européen des brevets**

(11) **EP 4 471 673 A1**

(12) **EUROPEAN PATENT APPLICATION**

(43) Date of publication:
**04.12.2024 Bulletin 2024/49**

(21) Application number: **23176045.5**

(22) Date of filing: **30.05.2023**

(51) International Patent Classification (IPC):
***G06N 10/40*** *(2022.01)*

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Universität Innsbruck
  6020 Innsbruck (AT)**
- **Österreichische Akademie der Wissenschaften
  1010 Wien (AT)**

- **Universita Degli Studi di Trieste
  34127 Trieste (IT)**

(72) Inventors:
- **Pichler, Hannes
  6020 Innsbruck (AT)**
- **Cesa, Francesco
  34127 Trieste (IT)**

(74) Representative: **Schwarz & Partner Patentanwälte GmbH
Patentanwälte
Wipplingerstraße 30
1010 Wien (AT)**

(54) **UNIVERSAL QUANTUM COMPUTATION IN GLOBALLY DRIVEN RYDBERG ATOM ARRAYS**

(57) This application concerns an apparatus for quantum computing and a quantum computing method comprising:
• providing a quantum system comprising n one-dimensional wires of physical qubits,
• initializing each wire in a standard configuration such that each wire corresponds to a logical qubit,
• driving the quantum system into a final state via applying a sequence of controls,
• performing a measurement on the quantum system to obtain a readout.

**EP 4 471 673 A1**

**Description**

The present invention relates to a quantum computing method and an apparatus for quantum computing.

Background of the invention

Quantum computation (QC) leverages quantum mechanical effects for solving computational problems. In the standard paradigm, known as the circuit model (CM), an algorithm is executed by applying a sequence of gates on a register of quantum units (qubits); alternatively, other models for QC have been developed, including measurement-based, adiabati, and topological schemes. While they are all fundamentally equivalent, particular features of each model are often appealing for specific implementations. Indeed, several physical platforms have demonstrated remarkable progress in realizing the main building blocks of the various models.

Recently, arrays of neutral atoms in optical tweezers have emerged as a promising platform for quantum information processing: deterministically assembled arrays of atoms are coherently manipulated with optical pulses and entangled through strong Rydberg interactions, to realize programmable and scalable processors. One approach to use this platform for QC is to realize the CM: qubits are encoded in atomic levels, with single and multi-qubit gates executed via local optical control. While this approach has seen remarkable progress, the requirement for individual addressing of atoms remains a formidable technological challenge.

Short description of the invention

The object of the present invention is a model for universal quantum computation, which only relies on: (i) initialization of the physical units in a uniform configuration, (ii) global control, (iii) redout in a uniform, predetermined basis, wherein during the whole process individual control of any unit is never required.

A solution to the above mentioned problem is provided by a quantum computing method comprising: providing a quantum system comprising n one-dimensional wires of physical qubits, initializing each wire in a standard configuration such that each wire corresponds to a logical qubit, driving the quantum system into a final state via applying a sequence of controls, performing a measurement on the quantum system to obtain a readout.

A solution is further provided by an apparatus for quantum computing, comprising: a classical computing system, a quantum system comprising a plurality of physical qubits in a spatial arrangement, a quantum processing unit configured for initializing some or all of the physical qubits in a quantum state and driving this state into a final state, and a measurement unit configured for measuring at least a portion of the plurality of physical qubits, wherein the apparatus is capable to perform operations comprising the methods of any one of the preceding claims.

In preferred embodiments the physical qubits correspond to atomic qubits, wherein each wire comprises two types of qubits, A and B. These two types of qubits can be e.g. atomic species.

Further, the two types of qubits A and B may alternate in each wire.

In another embodiment neighbouring qubits in a wire lie at a distance less than an interaction range radius. This interaction range radius can be e.g. the Rydberg blockade radius.

Preferably, in the standard configuration the physical qubit at site $k$ in the wire corresponds to the logical qubit, wherein all other qubits are in a known configuration. For example, this configuration may correspond to a state, where either all qubits at sites $k' > k$ are in the ground state and all qubits at sites $k' < k$ are alternating in the excited or ground state or vice versa. In other embodiments in this configuration all other qubits may be either in the ground or excited state in an alternating way.

In another embodiment the quantum system comprises several impurities, which behave as modified qubits, wherein each wire may comprise several impurities each at a single site in the wire, wherein neighbouring wires may comprise several impurities between them. The impurities can be e.g. clusters of four physical qubits.

Summarizing, the model solving the above stated problem may comprise: (i) arranging the physical units in an adequate spatial configuration, including some impurities, (ii) identifying one dimensional arrays (wires) as logical qubits, (iii) defining a standard configuration such that the qubit is entirely located at one site of the wire when the wire is in the standard configuration, (iv) initializing all the units in a uniform starting state, (v) applying a sequence of global controls which drive the array from the starting state to an initial standard configuration, (vi) driving the system to a final state through global controls by

- Propagating the information corresponding to the qubit through the wire with a sequence of global pulses which transform the standard configuration with the qubit located at a given site to the standard configuration with the qubit located at another site;
- Manipulating the individual logical qubits through global controls by exploiting impurities inside the wires when the information reaches them in the standard configuration;

- Executing selected multi-qubit gates by leveraging impurities between the corresponding wires, and applying specific global controls when the information reaches the sites separated by such impurities,

and (vii) measuring part of the units in a uniform, predetermined basis in order to extract the output of the computation.

<u>Detailed description and preferred embodiments</u>

The foregoing and other objects, features and advantages of the invention will become more apparent from the following detailed description, which proceeds with reference to the accompanying figures.

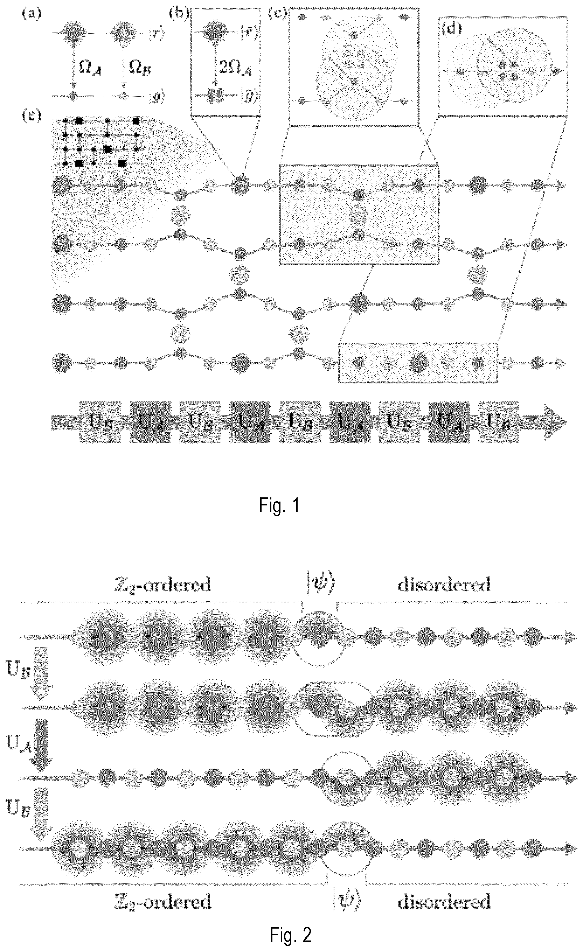

Fig. 1a to 1e    shows two atomic species A and B for the model (Fig. 1a), superatoms used as impurities (Fig. 1b), Blockade relations enabling two- and single-qubit gates (Fig. 1c and Fig. 1d) and a circuit which is translated in an atomic arrangement, where optical pulses propagate the information flow through the wires, which represent logical qubits (Fig. 1e).

Fig. 2    shows how the state of a logical qubit can be transported through a wire via global pulses.

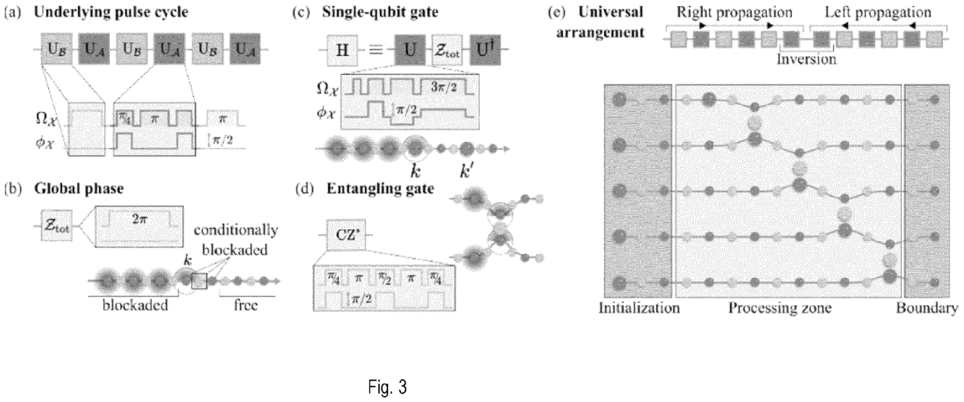

Fig. 3a to 3e    shows how global pulses act as population inversions by showing the duration of the pulses and the phase of the laser (Fig. 3a), examples of single-qubit gates and entangling operations via globally driving the whole array at once (Fig. 3b - 3d) and a universal arrangement of the quantum system, where the information can be moved both to the left and to the right, at each step localized where it is needed (Fig. 3e).

The invention discloses an alternative model for QC, that can be readily implemented e.g. with Rydberg atom arrays. The model does not require any local addressing or dynamical rearrangement. Instead any quantum algorithm is completely specified by the static atomic positions and executed by driving the array with a global, resonant laser field in a Rydberg blockade regime. In one embodiment this novel QC model is executed on the example of a dual species array, but it can be transposed to several other frameworks. Specifically, it is possible to translate any n-qubit quantum circuit of depth p in an arrangement of $O(n^2)$ atoms, and a sequence of $O(p)$ global, resonant laser pulses that drive the transition from an internal ground state to a Rydberg state in a species-selective, but global way. In the model all atoms may be initialized in the internal electronic ground state, and the final read-out is performed in the computational basis, such that no local control is required. This approach could potentially also be beneficial for other quantum computing architectures with static hardware layout.

The QC model is based on several key ideas, which are outlined in the following, before detailing them individually. Preferably, n 1D wires of physical qubits, e.g. atoms, are considered, each hosting a qubit degree of freedom. At each step, the qubit state is entirely located at a single qubit, e.g. atom, preferably, at the interface between an ordered and a disordered sector of the wire, as shown in Fig. 2 on the top. This configuration of qubits may be called the standard configuration, and is denoted as $|\Psi(k)\rangle$. Further, a sequence of global laser pulses can be designed, such that

$$|\Psi(k)\rangle \xrightarrow{global\ pulses} |\Psi(k+1)\rangle$$

. Essentially, the qubit propagates through the wire as the pulses progress - hence defining an information flow. By breaking the symmetry at selected points, the quantum information can be manipulated during this propagation process. Preferably, two types of impurities are used inside the construction. One can insert impurities of the first type inside the wires; when an interface reaches them, it can be individually manipulated through global pulses, thus realizing single-qubit gates. One can further insert impurities of the second type between the wires, triggering an interaction between the interfaces when they pass by - i.e., achieving multiple-qubit gates. The combination of these constructions translates any quantum circuit into an arrangement of quantum units, e.g. atoms, where wires represent the lines in the quantum circuit, and impurities the location of gates.

Example of a physical setup:

In a certain embodiment a tweezer array with two atomic species, A and B, can be used for the inventive method and apparatus. Note, however, that the inventive method and apparatus is not restricted to this example setup. In this array all atoms of each species can be trapped and arranged individually in arbitrary 2D configurations. For each atom, two internal electronic states are considered, as also depicted in Fig. 1a: an internal ground state $|g\rangle$, and a highly excited Rydberg state $|r\rangle$. The Pauli algebra may be defined as $Z = |g\rangle\langle g| - |r\rangle\langle r|$, $X = |r\rangle\langle g| + |g\rangle\langle r|$. Preferably, in this setup the ground state can be coherently coupled to the Rydberg state in a species-selective way with global resonant laser fields, i.e. a laser that acts identically on all atoms of the same species. In addition, atoms in the Rydberg state interact pairwise via induced dipole-dipole interactions. The Hamiltonian describing this setup is given by H = $H_A$ + $H_B$ + $H_{int}$, with

$$H_X = \frac{\hbar\Omega_X}{2}\sum_{i \in X}\left[e^{i\phi X}|g\rangle_i\langle r| + h.c.\right] \qquad H_{int} = \frac{1}{2}\sum_{i \neq j}V_{i,j}|r_i r_j\rangle\langle r_i r_j|$$

. Here, $\Omega_X$ and $\phi_X$ are the Rabi frequency and the phase of the laser driving the species X $\in$ {A, B}, and $V_{i,j}$ is the van-der-Waals interaction strength between the Rydberg atoms i and j. This includes both inter- and intraspecies interactions, which can be tuned independently via Förster resonances. More importantly, the interaction strength decays rapidly with the atomic separation, $d_{i,j}$, as $V_{i,j} \sim d_{i,j}^{-6}$. At short distances this gives rise to the Rydberg blockade effect, effectively preventing more than one Rydberg excitation within a blockade radius $R_B$, while at larger atomic separations the interactions are negligible. In the following for every pair of atoms either perfect blockade or no interactions is assumed, resulting in a two-species variant of the so-called PXP-model.

While it is assumed that the global laser parameters $\Omega_X$ and $\phi_X$ can be controlled in a time dependent way, the arrangements of the atoms, and thus their mutual blockade relations, are static in this model.

Logical qubits:

We start by describing the basic building block in the model and apparatus: a single wire of physical qubits, e.g. atoms, that effectively hosts a logical qubit. In such a wire the two types of qubits, e.g. species, may alternate in certain embodiments, and may be subjected to nearest-neighbor blockade constraints. The qubits along the wire can be labelled by k $\in$ {0, 1, 2, ...}.

As also described above a wire may be in the standard configuration (SC), with the interface at site k. For example, in the SC all atoms at sites k' < k may be in the $\mathbb{Z}_2$-ordered configuration, $|... r_{k-4}g_{k-3}r_{k-2}g_{k-1}\rangle$, while for k' > k they may be all in the ground state, $|g_{k+1}g_{k+2}g_{k+3}...\rangle$. The qubit at site k can be called the interface, which can be in any arbitrary superposition $|\psi_k\rangle = \alpha |g_k\rangle + \beta |r_k\rangle$. The notation $|\Psi(k)\rangle = |...r_{k-4}g_{k-3}r_{k-2}g_{k-1}\rangle |\psi_k\rangle|g_{k+1}g_{k+2}g_{k+3}...\rangle$ may be used and it can be represented as shown in Fig. 2, top line.

Next, the fundamental underlying operation in the model can be introduced: In preferred embodiments throughout the computation, we keep on applying a sequence of pulses of the form $...U_B U_A U_B U_A U_B U_A...$, alternating the addressed species. The unitaries Ux induce a conditional flip of the states of X -atoms: each atom flips the populations, $|g\rangle \leftrightarrow |r\rangle$, if all its neighbors are in $|g\rangle$. For $U_B$, such an operation is induced by a simple $\pi$ pulse with the laser driving B; for reasons that will become clear below, instead a three-pulse sequence may be used to realize $U_A$. We now show that these alternating pulses can be used for moving the interface through the wire, as shown in Fig. 2. Specifically, without loss of generality we assume that the atom hosting the interface at site k is of the A-type; we now show that $U_B U_A U_B|\Psi(k)\rangle = |\Psi(k + 1)\rangle$. This can be understood by looking at the blockade constraints step by step (Fig. 2). First we apply $U_B$: the system in the example of Fig. 2 is in a SC, where all B-atoms to the left of k are blockaded and cannot evolve, while all atoms to the right of k get excited; only the evolution of the atom at site k + 1 is nontrivial, as it depends on the state of the qubit at site k. It only gets excited if the latter is in the state $|g_k\rangle$, leading to the entangled state $|...g_{k-3}r_{k-2}g_{k-1}\rangle [\alpha|g\,r\rangle+\beta|r\,g\rangle]_{k,k+1} |g_{k+2}r_{k+3}g_{k+4}...\rangle$, with the quantum information shared between k and k+1, as shown in Fig. 2, second line. Then, $U_A$ de-excites the A-atoms at sites k' $\leq$ k, while all other atoms do not evolve due to the blockade constraint, hence yielding $U_A U_B|\Psi(k)\rangle = |...g_{k-2}g_{k-1}g_k\rangle [X|\psi\rangle]_{k+1} |g_{k+2}r_{k+3}g_{k+4}...\rangle$, where the qubit is moved to k + 1, but flipped as shown in Fig. 2, third line. Finally, $U_B$ excites the B-atoms at sites k' $\leq$ k and de-excites those at k' $\geq$ k + 2, while flipping k + 1, eventually leading to $|\Psi(k + 1)\rangle$, as shown in Fig. 2, bottom line.

All together, during the cycle where a sequence of pulses is applied the SC of the physical qubits can be moved from one site to the other. Thus, a dispersionless flow of quantum information is induced, with the interface moving to the right. This is the underlying mechanism of the model: while the pulse cycle propagates the information, it can be manipulated by inserting additional global laser pulses in this sequence at stroboscopic times, when all wires are in the SC; non trivial operations can be enabled by introducing impurities in the setup. Next it is shown how, by doing this, one can unlock the full toolbox of universal QC. Specifically, from now on an array of n wires will be considered as the one described so far, see also Fig. 1e, each hosting its own qubit. The application of the pulse cycle thus moves all qubits in parallel through their own wires.

Collective phase gates:

In the following an example of a simple operation that imprints a phase on all the qubits in parallel is discussed, specifically $\mathcal{Z}_{tot} = \otimes_Q Z_Q$, where Q runs over logical qubits (i.e., wires). For this, consider the SC with the interface on an A-atom at k, as shown in Fig. 3b. To realize $\mathcal{Z}_{tot}$, we drive the B atoms with a global $2\pi$ pulse: all B-atoms to the left of the interface do not evolve due to the blockade constraints, and all those at sites k' > k + 1 pick up an irrelevant global phase. Only the evolution of the B-atoms at site k + 1 is nontrivial: it picks up a phase factor -1 if and only if the qubit on site k is in | gk⟩. This conditional phase is thus equivalent to the application of a Z gate on the qubit; since this happens in parallel for all the wires, it results in $\mathcal{Z}_{tot}$.

Impurities:

Next we discuss an example of an impurity. In this embodiment a superatom is a cluster of S qubits, e.g. atoms, of the same species, all arranged within a blockade radius $R_B$. Then, the blockade constrains them to a collective dynamics, where only one can be excited at a time; this effectively realizes a two level system, featuring an effective ground state $|\bar{g}\rangle$, where all atoms in the cluster are in the internal ground state, and an effective excited state $|\bar{r}\rangle$, where a single Rydberg excitation is shared among the cluster. Importantly, under the Hamiltonian H describing the setup the Rabi frequency of this two level system is enhanced, and given by $\sqrt{S}\Omega_X$. While the arguments below can be straightforwardly transposed to any $S \geq 2$, here we focus on the choice S = 4 for simplicity. Then, we have the prescription $|\bar{g}\rangle = |gggg\rangle$, $|\bar{r}\rangle = (|rggg\rangle + |grgg\rangle + |ggrg\rangle + |gggr\rangle)/2$, with the corresponding Pauli algebra. We assume each superatom is always either completely inside or outside the blockade radii of other atoms. Therefore, the four components interact as a unique entity.

Below we will replace some of the A-atoms in the wires by A-superatoms. Since the superatoms have different Rabi frequency, the pulses realizing $U_A$ must be carefully designed, to ensure the propagation of the qubit through the wire also in the presence of these impurities. Specifically, the sequence in Fig. 3a realizes a population flip on both regular as well as superatoms. Moreover, note that the protocol for $\mathcal{Z}_{tot}$ is not affected by the eventual presence of B-superatoms, as the $2\pi$ pulse translates to a $4\pi$ on them, i.e., an identity.

Single-qubit unitaries:

In the following we describe a possibility to implement single-qubit unitaries in the setup.

One can load an A-superatom in place of an A-atom at a site k of a wire. This allows to execute a single-qubit gate on the qubit hosted by the wire when the interface is located at k.

For universal QC only unitaries of the form U($\phi$, $\alpha$) = $e^{-i\alpha R(\phi)/2}$ are needed, where R($\phi$) = cos($\phi$)X + sin($\phi$)Y, i.e. rotations around axes lying in the xy plane. Any rotation around the z axis can then be accounted for by classical processing. For this reason, in the following we will ignore phase corrections. When the interface is located at the superatom, we apply a global sequence of pulses, which depends on the unitary to be executed, and must be such that: (i) normal atoms (of both species), and B-superatoms, wherever they are located, must be unaffected at the end of the sequence; (ii) an A-superatom placed at k must undergo the desired unitary; (iii) any A-superatom placed at k ≠ k must be unaffected. We first explicitly show how to engineer a Hadamard gate, H=(X+Z)/$\sqrt{2}$ = $e^{-i\pi Y/4}$. Then, we generalize to arbitrary gates.

The pulse sequence for the Hadamard gate is shown in Fig. 3c. It can be divided in three steps: first, a pulse sequence on the species A, inducing a single-atom evolution U; then, the $\mathcal{Z}_{tot}$ protocol; finally, the inverse of the first sequence, $U^\dagger$. The first step acts on A-atoms as

$$U = U\left(\frac{\pi}{4}, \frac{3\pi}{2}\right) U\left(-\frac{\pi}{4}, \frac{3\pi}{4}\right) U\left(\frac{\pi}{2}, \frac{\pi}{2}\right) U\left(0, \frac{\pi}{4}\right) = \mathbb{1}.$$

Since it does not affect the populations, during the second step all the blockade constraints are maintained, so that the $\mathcal{Z}_{tot}$ operation works as we described above. Hence, on A-atoms the whole sequence acts as

$$U^\dagger\, Z U = Z = \mathbb{1}$$

(for atoms at the interface of a wire), or

$$U^{\dagger} U = \mathbb{1}$$

(otherwise), thus addressing requirement (ii). Consider now the superatom in k. Due to the enhanced Rabi frequency, the first (third) step is described by a different unitary $\overline{U}$ ($\overline{U}^{\dagger}$) which now mixes the populations.

Specifically, the evolution is found by considering effective doubled pulse durations in place of the above

$$\overline{U} = U\left(\frac{\pi}{4}, 3\pi\right) U\left(-\frac{\pi}{4}, \frac{3\pi}{2}\right) U\left(\frac{\pi}{2}, \pi\right) U\left(0, \frac{\pi}{2}\right)$$

equation, obtaining . This corresponds to a $\pi/4$ rotation. Then, because it is at the interface of the SC, the second step acts as a $\overline{Z}$ gate on it (as part of $\mathcal{Z}_{tot}$), and finally the inverse of the first step is applied.

$$\overline{U}_{tot} = \overline{U}^{\dagger}\overline{Z}\overline{U} = -\frac{\overline{X}+\overline{Z}}{\sqrt{2}} = -e^{-i\pi\overline{Y/4}}$$

Eventually, one finds , i.e., the overall operation is a Hadamard gate. Thus, requirement (ii) is fulfilled. Regarding (iii), any A-superatom located at $k' \neq k$ does not feel $\mathcal{Z}_{tot}$ because it is not at the interface point of the SC: if $k' \leq k - 2$ its neighbouring B-atoms are both blockaded; if $k' \geq k + 2$ none is, hence the two conditional phases annihilate as $\overline{Z}^2 = 1$. Therefore, the first and third step cancel out, and the evolution is an identity.

The above arguments generalize to any $\pi/2$ rotation around any axis in the xy plane. Specifically, any unitary of the form $U(\phi,\pi/2)$ is achieved by shifting all the phases by $\phi - \pi/2$. Moreover, since we can perform $\pi/2$ rotations around any axis in the xy plane, we have access to any unitary $U(\phi, \alpha)$. For instance, a rotation around the x axis is composed as

$$U(0, \alpha) = U\left(\frac{\pi}{2} - \alpha, \frac{\pi}{2}\right) U\left(-\frac{\pi}{2}, \frac{\pi}{2}\right)$$

. Again, generalization to arbitrary xy axes follows directly, by shifting the phases during the driving.

Two remarks are important. First, the crucial feature of the SC, which enables local control, is that only the interface interacts with an odd number of non blockaded atoms, which in turn enables the $\mathcal{Z}_{tot}$ protocol. Second, this only works if we never have A-superatoms close to each other, in the sense that their distance must always be $\Delta k \geq 4$. Otherwise, the intermediate step would generate entanglement inside the array, corrupting the SC.

Entangling gates:

In the following we will consider an example of an entangling gate. By placing a B-superatom between two wires, one can enable the option to perform a CZ = 1 - 2 |gg⟩⟨gg| gate, entangling the two qubits that propagate through these wires. The protocol works by applying the sequence in Fig. 3d as the two interfaces pass by the connection: this applies an effective $2\pi$ pulse on both normal and artificial B-atoms. However, the B-superatom is blockaded by the two qubits simultaneously, meaning it evolves if and only if they are both in the ground state: since the eventual $2\pi$ evolution provides a -1 phase, this exactly results in a CZ between the two. Note that since also regular B-atoms undergo a $2\pi$ pulse, as a byproduct we also get a $\mathcal{Z}_{tot}$, i.e. the overall operation is $CZ^* = \mathcal{Z}_{tot}$ CZ. We finally remark that this protocol can be straightforwardly extended to execute any conditional-phase gate (by changing the pulse sequence), even including multi-qubit gates (by connecting more than two wires with the same impurity).

Initialization:

In the following we consider an example of an initialization. We start with all atoms in the ground state. As in Fig. 1e, all the wires begin with a superatom in k = 0. Only these interact with just one B-atom, hence, as remarked above, we can apply the protocol for single-qubit gates to bring them all in $|\bar{r}\rangle$. Then, by starting the cycle of global pulses with $U_B$, after 6 alternated pulses the system reaches the SC at k = 2, with all qubits in $|\psi\rangle = |r\rangle$; from now on, the transport mechanism works as explained, hence the computation starts. Importantly, because of the superatom in k = 0, local control is unlocked at k = 4.

Universal arrangement:

Any quantum circuit is therefore mapped to O(np) global pulses on O($n^2$ p) atoms, whose positions directly correspond to the arrangement of the gates in the circuit. Note that these are very conservative bounds, which assume at each step all logical qubits must undergo a different unitary; for specific applications, the scaling can be more favorable, as in this model qubits can undergo the same gate in parallel. Moreover, we can use circuit-independent universal arrangements, consisting of $O(n^2)$ of atoms, independently on the depth p. The idea is to exploit the fact that the interface can not only be moved right, but also left, by simply inverting the order of the pulse cycle. Then, by exploiting universal arrangements as in Fig. 3e, we execute any circuit step by step, by moving the information to the left or to the right in order to localize it at predefined positions, where single and two-qubit gates can be triggered. Specifically, we place an A-superatom in each wire, and a B-superatom between each pair of neighboring wires. These are arranged such that we can execute any desired gate individually, by moving the interface to the corresponding superatom position. In this way the required number of atoms no longer depends on the circuit depth, and the atom arrangement does not need to be adapted to the circuit.

Summarizing, a model comprising a method and an apparatus for universal QC is disclosed, which does not require local addressing of the units of the quantum processor: the algorithm is imprinted in the layout of the units, and executed by global control pulses. This model can be readily implemented on dual-species arrays of Rydberg atoms, but it can be transposed to other setups. This includes single-species arrays, e.g. by leveraging hyperfine levels or, potentially, quantum many-body scar phenomena, but also other quantum computing platforms such as superconducting qubits. Moreover, here all pulse sequences are chosen not for optimality, but for simplicity: optimal control techniques can be exploited for shortening the pulse durations. The model features even more economic arrangements for circuits consisting of identical parallel gates, as often occurs in approaches based on variational algorithms.

**Claims**

1. A quantum computing method comprising:

   • providing a quantum system comprising n one-dimensional wires of physical qubits,
   • initializing each wire in a standard configuration such that each wire corresponds to a logical qubit,
   • driving the quantum system into a final state via applying a sequence of controls,
   • performing a measurement on the quantum system to obtain a readout.

2. The method according to claim 1, wherein the physical qubits correspond to atomic qubits, wherein each wire comprises two types of qubits, A and B.

3. The method according to claim 2, wherein the two types of qubits A and B alternate in each wire.

4. The method according to any of the preceding claims, wherein neighbouring qubits in a wire lie at a distance less than an interaction range radius.

5. The method according to any of the preceding claims, wherein in the standard configuration the physical qubit at site k in the wire corresponds to the logical qubit, wherein all other qubits are in a known configuration.

6. The method according to any of the preceding claims, wherein the quantum system comprises several impurities, which behave as modified qubits, wherein each wire may comprise several impurities each at a single site in the wire, wherein neighbouring wires may comprise several impurities between them.

7. An apparatus for quantum computing, comprising:

   • a classical computing system,
   • a quantum system comprising a plurality of physical qubits in a spatial arrangement,
   • a quantum processing unit configured for initializing some or all of the physical qubits in a quantum state and driving this state into a final state,
   • and a measurement unit configured for measuring at least a portion of the plurality of physical qubits,

   wherein the apparatus is capable to perform operations comprising the methods of any one of the preceding claims.

Fig. 1

Fig. 2

Fig. 3

# EUROPEAN SEARCH REPORT

Application Number

**EP 23 17 6045**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLUVSTEIN DOLEV ET AL: "A quantum processor based on coherent transport of entangled atom arrays", CLEO: APPLICATIONS AND TECHNOLOGY 2019 SAN JOSE, CALIFORNIA UNITED STATES 5-10 MAY 2019, OPTICA, vol. 604, no. 7906, 20 April 2022 (2022-04-20), pages 451-456, XP037802598, DOI: 10.1038/S41586-022-04592-6 [retrieved on 2022-04-20] * abstract * * page 451 - page 456 * * page 7 (Ex.D) - page 21(Ex.D) * | 1-7 | INV. G06N10/40 |
| A | Cocchiarella Denise: "Multi-qubit gates for Rydberg atoms and applications in Entanglement measurements", Master Thesis, 28 February 2022 (2022-02-28), XP093093092, DOI: 10.13140/RG.2.2.22214.86083 Retrieved from the Internet: URL:https://www.researchgate.net/profile/Denise-Cocchiarella/publication/373873020_Multi-qubit_gates_for_Rydberg_atoms_and_applications_in_Entanglement_measurements/links/65015f0868ca5847e3d696d3/Multi-qubit-gates-for-Rydberg-atoms-and-applications-in-Entanglement-measurements.pdf [retrieved on 2023-10-19] * the whole document * | 1-7 | |

TECHNICAL FIELDS SEARCHED (IPC)

G06N

-/--

The present search report has been drawn up for all claims

| Place of search | Date of completion of the search | Examiner |
|---|---|---|
| The Hague | 20 October 2023 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches
Patentamt

European
Patent Office

Office européen
des brevets

# EUROPEAN SEARCH REPORT

**Application Number**

EP 23 17 6045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BIN CHENG ET AL: "Noisy intermediate-scale quantum computers", ARXIV.ORG, CORNELL UNIVERSITY LIBRARY, 201 OLIN LIBRARY CORNELL UNIVERSITY ITHACA, NY 14853, 7 March 2023 (2023-03-07), XP091457345, DOI: 10.1007/S11467-022-1249-Z * page 21 - page 27 * | 1-7 | |

TECHNICAL FIELDS
SEARCHED       (IPC)

The present search report has been drawn up for all claims

| Place of search | Date of completion of the search | Examiner |
|---|---|---|
| The Hague | 20 October 2023 | Tsakonas, Athanasios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)